# EUROPÄISCHE PATENTSCHRIFT

(11) **EP 1 209 383 B1**
(45) Veröffentlichungstag und Bekanntmachung des Hinweises auf die Patenterteilung: **27.04.2005**
(21) Anmeldenummer: 01127504.7
(22) Anmeldetag: 17.11.2001
(51) Int. Cl.: F16J 15/08, F16J 15/12

(54) **Metallische Zylinderkopfdichtung**
Metallic cylinder head gasket
Joint de culasse métallique

(30) Priorität: 24.11.2000 DE 10058495
(43) Veröffentlichungstag der Anmeldung: 29.05.2002
(73) Patentinhaber: Federal-Mogul Sealing Systems GmbH, 57562 Herdorf (DE); Federal-Mogul Sealing Systems Bretten GmbH & Co. KG, 75015 Bretten (DE)
(72) Erfinder: Klinner, Manfred, Dipl.-Ing., 51145 Köln (DE); Bendl, Klaus, Dipl.-Ing., 75015 Bretten (DE); Walz, Timo, Dipl.-Ing., 75053 Gondelsheim (DE); Salameh, Ralf, Dipl.-Ing., 75015 Bretten (DE); Retiere, Alain, 40629 Erkrath (DE)

(56) Entgegenhaltungen:
- EP-A- 0 540 855
- EP-A- 0 867 645
- DE-A- 3 001 599
- DE-A- 4 109 951

## Beschreibung

Die Erfindung betrifft eine Zylinderkopfdichtung für Verbrennungskraftmaschinen, bestehend aus einer oder mehreren übereinanderliegenden Platten aus Metall mit Durchgangsöffnungen für den Durchtritt von Kühlflüssigkeiten oder Schmiermitteln sowie die Durchgangsöffnungen umschließenden Dichtungselementen aus elastomeren oder duroplastischen Material wobei die Dichtungselemente an verschiedenen Durchgangsöffnungen aus unterschiedlichen Materialien bestehen.

Zur Erzielung von setzarmen und weitgehend nachzugsfreien Zylinderkopfdichtungen ist es bekannt, vor allem in Verbrennungskraftmaschinen mit hohen Verbrennungsdrücken metallische Zylinderkopfdichtungen einzusetzen. Es werden einals auch mehrlagige Dichtungskonstruktionen verwendet. Die einzelnen Metalllagen bestehen dabei bevorzugt aus Stahl wobei bei mehrlagigen Konstruktionen die einzelnen Lagen unterschiedliche Eigenschaften aufweisen können. So können beispielsweise die äußeren Lagen aus dünnen elastischen, harten Stahlblechen gebildet sein während die inneren Lagen aus dickeren weicheren Stahlblechen bestehen. Problematisch ist bei metallischen Dichtungen vor allem wegen der geringen plastischen Verformbarkeit die Abdichtung an den Durchgangsöffnungen für das Schmieröl des Motors oder das Kühlmittel für den Brennraum. Diese Bereich werden vielfach mittels elastomerer oder plastomerer Dichtelemente abgedichtet. So ist es seit langem bekannt, die Durchgangsöffnungen durch eingespritzte Dichtungselemente abzudichten. Die GB PS 852413 offenbart ein solches Herstellungsverfahren. Die einzelnen Duchgangsöffnungen werden mit ein und demselben Werkstoff abgedichtet.

Moderne Motoren verlangen immer bessere Abdichtzonen, da der Werkstoff für die Abdichtung von Kühlflüssigkeiten anderen Anforderungen gerecht werden muß als der Werkstoff für die Abdichtung von Schmiermittelöffnungen, ist es nicht sinnvoll sämtliche Durchgangsöffnungen mit einem universal Werkstoff abzudichten.

Zur Lösung dieses Problems hat man bereits Zylinderkopfdichtungen konzipiert, bei denen die unterschiedlichen Durchgangsöffnungen mit elastomeren Dichtungselementen abgedichtet wurden, die auf die durch die Durchgangsöffnungen hindurchtretenden Fluide abgestimmt waren.
Die DE 4109951 C2 offenbart eine solche gattungsgemäße Zylinderkopfdichtung bei der in die Durchgangsöffnungen elastomere Dichtelemente eingesetzt sind. Die Dichtungselemente sind als getrennt von der Dichtung hergestellte, separate Bauteile ausgebildet und werden in die Durchgangsöffnungen eingesetzt und mit einer Dichtungsplatte formschlüssig verbunden.

Der Erfindung liegt die Aufgabe zugrunde eine gattungsgemäße Zylinderkopfdichtung dahingehend zu verbessern, dass im Massenfertigungsbetrieb die unterschiedlichen Dichtungselemente direkt an eine Dichtungsplatte anspritzbar sind ohne das die Herstellungskosten gesteigert werden.

Diese Aufgabe wird erfindungsgemäß durch die kennzeichnenden Merkmale des Patentanspruch 1 gelöst.

Vorteilhafte Ausgestaltungen der Erfindung sind in den Unteransprüchen dokumentiert.

Durch die Verwendung eines universal Haftvermittlers ist es nunmehr möglich unterschiedliche Materialien direkt an die metallische Platte anzuspritzen ohne dass es erforderlich ist separate Bauteile herzustellen. Jedes Dichtelement kann gezielt auf den jeweiligen Anwendungsfall abgestimmt werden. Der bisher geglaubte Kostennachteil wird dadurch beseitigt, dass für geringe Anforderungen preiswerte Materialien verwendet werden und der sonst übliche Arbeitsgang, samt seiner damit verbundenen Logistik, der separaten Bauteilherstellung entfallen kann.

Die Erfindung ist anhand eines Ausführungsbeispieles in der Zeichnung dargestellt und wird im folgenden näher erläutert.

Es zeigen:
- Fig.1: eine erfindungsgemäße Zylinderkopfdichtung in der Aufsicht.
- Fig.2: eine Ansicht gemäß Fig. 1 der Linie II-II.

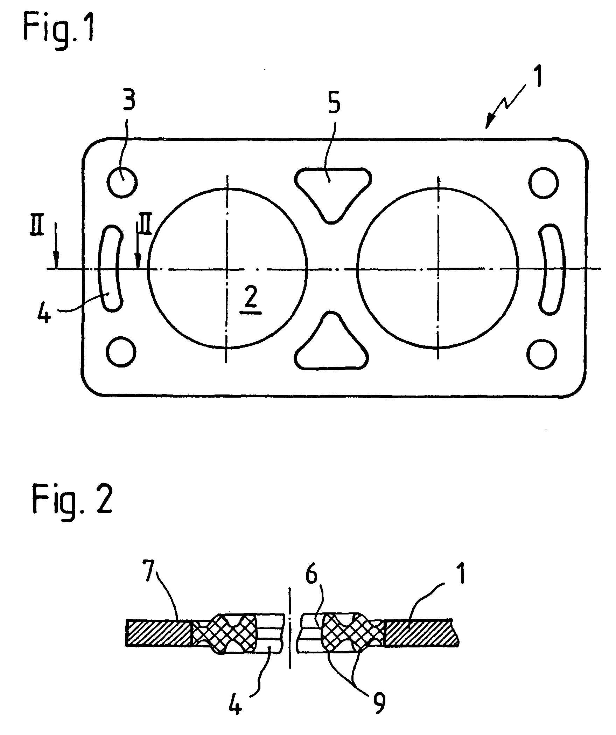

Die Figur 1 zeigt eine metallische Zylinderkopfdichtung 1 in der Aufsicht. Die Dichtung ist als Einlagendichtung ausgebildet, es können aber zusätzliche Lagen auflaminiert sein.

Die aus nur einer Platte gebildete Zylinderkopfdichtung weist mehrere Durchgangsöffnungen 2,3,4,5 für Brennräume 2, Befestigungsschrauben 3, für das Schmiermittel 4 und für das Kühlmittel 5.

Die Fig. 2 zeigt einen Querschnitt gemäß Linie II-II der Figur 1. Die Durchgangsöffnung 4 für das Schmiermittel weist ein angespritztes Dichtungselement 6 auf. Das Dichtungselement 6 weist eine Profilierung auf, die aus der Oberfläche 7 der metallische Platte herausragt und als Doppelrippe 9 ausgebildet ist.

Das Profil des Dichtungselementes 6 ist gleichermaßen für die Schmiermittelöffnung 4 oder für die Durchgangsöffnung 5 für das Kühlmittel ausgebildet. Die Dichtungselemente unterscheiden sich lediglich in den Materialien.
Damit das jeweilige Dichtungselement 6 sich auch mit der Platte fest verbindet, ist die gesamte Platte mit einem Haftvermittler überzogen (nicht dargestellt). Der Haftvermittler kann im Eintauchverfahren aufgetragen oder aber aufgespritzt sein. Die Dichtungselemente bestehen aus Elastomer- oder Kautschukwerkstoffen wie HNBR oder FPM oder FPM-Olefin Copolymere.

## Patentansprüche

1. Zylinderkopfdichtung (1) für Verbrennungskraftmaschinen, bestehend aus einer oder mehreren übereinanderliegenden Platten aus Metall mit Durchgangsöffnungen (4,5) für den Durchtritt von Kühlflüssigkeiten oder Schmiermitteln sowie die Durchgangsöffnungen (4,5) umschließenden Dichtungselementen (6) aus elastomerem oder duroplastischem Material, wobei die Dichtungselemente (6) an verschiedenen Durchgangsöffnungen (4,5) aus unterschiedlichen Materialien bestehen und wobei die Dichtungselemente (6) für den Durchtritt von Kühlflüssigkeiten (5) aus wasserbeständigem und die Dichtungselemente (6) für den Durchtritt von Schmiermitteln (4) aus ölbeständigem Material bestehen, **dadurch gekennzeichnet, dass** auf eine die Dichtungselemente (6) aufnehmende Platte ein einziger Haftvermittler aufgetragen ist, der als Bindemittel für unterschiedliche Materialien fungiert, so dass auf den Haftvermittler Dichtungselemente (6) aus unterschiedlichen Materialien im Spritzverfahren auftragbar sind.

2. Zylinderkopfdichtung nach Anspruch 1, **dadurch gekennzeichnet, dass** die Dichtungselemente (6) an die Innenumfangsfläche der Durchgangöffnungen (4,5) angespritzt sind.

3. Zylinderkopfdichtung nach den Ansprüchen 1 und 2, **dadurch gekennzeichnet, dass** die Dichtungselemente (6) für den Durchtritt von Kühlflüssigkeiten (5) aus Elastomer- oder Kautschukwerkstoffen auf Basis von Ethylen Propylen und gegebenenfalls Dien gebildet sind.

4. Zylinderkopfdichtung nach den Ansprüchen 1 bis 3, **dadurch gekennzeichnet, dass** die Dichtungselemente (6) für den Durchtritt von Schmiermitteln (4) aus Elastomer- oder Kautschukwerkstoffen auf Basis von Ethylen und/oder Acrylat gebildet sind.

5. Zylinderkopfdichtung nach den Ansprüchen 1 bis 4, **dadurch gekennzeichnet, dass** der Haftvermittler auf Silanbasis gebildet ist.

6. Zylinderkopfdichtung nach Anspruch 1 bis 5, **dadurch gekennzeichnet, dass** der Haftvermittler in einem Eintauchvorgang aufgetragen ist.

7. Zylinderkopfdichtung nach einem der Ansprüche 1 bis 6, **dadurch gekennzeichnet, dass** die Dichtungselemente (6) eine aus der Oberfläche (7) der Platte hinausragende Profilierung aufweisen.

8. Zylinderkopfdichtung nach Anspruch 7, **dadurch gekennzeichnet, dass** die Profilierung die Form einer Doppelrippe (9) aufweist.

## Claims

1. Cylinder head gasket (1) for internal combustion engines, which comprises one or more metal plates lying the one above the other and having through holes (4, 5) for coolants or lubricants to pass through, as well as sealing elements (6) formed from elastomeric or duroplastic material and surrounding the through holes (4, 5), the sealing elements (6) at different through holes (4, 5) consisting of different materials, and the sealing elements (6) for the coolant (5) passages consisting of water-resistant material and the sealing elements (6) for the lubricant (4) passages consisting of oil-resistant material, **characterised in that** there is applied to the plate receiving the sealing elements (6) a single bonding agent which acts as a binding agent for different materials, such that sealing elements (6) formed from different materials may be applied in a spraying process to the bonding agent.

2. Cylinder head gasket according to claim 1, **characterised in that** the sealing elements (6) are sprayed onto the inner circumferential surface of the through holes (4, 5).

3. Cylinder head gasket according to claims 1 and 2, **characterised in that** the sealing elements (6) for the coolant (5) passages are formed from elastomeric or rubber materials based on ethylene propylene and possibly diene.

4. Cylinder head gasket according to claims 1 to 3, **characterised in that** the sealing elements (6) for the lubricant (4) passages are formed from elastomeric or rubber materials based on ethylene and/or acrylate.

5. Cylinder head gasket according to claims 1 to 4, **characterised in that** the bonding agent is based on silane.

6. Cylinder head gasket according to claims 1 to 5, **characterised in that** the bonding agent is applied in a dipping process.

7. Cylinder head gasket according to one of claims 1 to 6, **characterised in that** the sealing elements (6) have a shaping protruding from the surface (7) of the plate.

8. Cylinder head gasket according to claim 7, **characterised in that** the shaping has the form of a double rib (9).

## Revendications

1. Joint de culasse (1) pour moteurs à combustion interne, comprenant au moins une ou plusieurs plaques métalliques superposées, ayant des ouvertures de passage (4, 5), pour le passage de fluides de refroidissement ou de lubrifiants, ainsi que d'éléments d'étanchéité (6) en élastomère ou en matériau thermodurcissable entourant les ouvertures de passage (4, 5), les éléments d'étanchéité (6) étant constitués de matériaux différents au niveau de différentes ouvertures de passage (4, 5), les éléments d'étanchéité (6) pour le passage de fluides de refroidissement (5) étant réalisés à partir d'un matériau résistant à l'eau, et les éléments d'étanchéité (6) pour le passage de lubrifiants (4) étant réalisés à partir d'un matériau résistant à l'huile, **caractérisé en ce que** sur une plaque recevant les éléments d'étanchéité (6), est appliqué un seul agent adhésif unique, qui agit en tant que liant pour les différents matériaux, de telle sorte que des éléments d'étanchéité (6) en matériaux différents sont applicables par un procédé d'injection sur l'agent adhésif.

2. Joint de culasse selon la revendication 1, **caractérisé en ce que** les éléments d'étanchéité (6) sont injectés sur la surface périphérique interne des ouvertures de passage (4, 5).

3. Joint de culasse selon la revendication 1 ou 2, **caractérisé en ce que** les éléments d'étanchéité (6) pour le passage de fluides de refroidissement (5) sont réalisés à partir de matériaux élastomères ou caoutchouc, à base d'éthylène propylène et éventuellement de diène.

4. Joint de culasse selon l'une des revendications 1 à 3, **caractérisé en ce que** les éléments d'étanchéité (6) pour le passage de lubrifiants (4) sont réalisés en matériaux élastomères ou caoutchouc à base d'éthylène et/ou d'acrylate.

5. Joint de culasse selon l'une des revendications 1 à 4, **caractérisé en ce que** l'agent adhésif est réalisé à base de silane.

6. Joint de culasse selon l'une des revendications 1 à 5, **caractérisé en ce que** l'agent adhésif est appliqué avec un procédé d'immersion.

7. Joint de culasse selon l'une des revendications 1 à 6, **caractérisé en ce que** les éléments d'étanchéité présentent un profil qui fait saillie hors de la surface supérieure (7) de la plaque.

8. Joint de culasse selon la revendication 7, **caractérisé en ce que** le profil présente la forme d'une double nervure (9).
